# EUROPEAN PATENT SPECIFICATION

(11) **EP 3 176 442 B1**
(45) Date of publication and mention of the grant of the patent: **11.11.2020**
(21) Application number: 15872368.4
(22) Date of filing: 10.09.2015
(51) Int. Cl.: F04D 29/68, F04D 29/52, F02C 7/04

(54) **AXIAL FLOW DEVICE WITH CASING TREATMENT AND JET ENGINE**
AXIALFLUSSVORRICHTUNG MIT GEHÄUSESTRUKTURIERUNG UND STRAHLTRIEBWERK
DISPOSITIF À ÉCOULEMENT AXIAL AVEC TRAITEMENT DU CARTER ET MOTEUR À RÉACTION

(30) Priority: 22.12.2014 JP 2014258675
(43) Date of publication of application: 07.06.2017
(73) Proprietor: IHI Corporation, Tokyo 135-8710 (JP)
(72) Inventor: MUROOKA, Takeshi, Tokyo 135-8710 (JP); KATO, Dai, Tokyo 135-8710 (JP); KUSUDA, Shinya, Tokyo 135-8710 (JP); SHUTO, Yukari, Tokyo 135-8710 (JP)
(74) Representative: MERH-IP Matias Erny Reichl Hoffmann Patentanwälte PartG mbB
(86) International application number: PCT/JP2015/075677
(87) International publication number: WO 2016/103799

(56) References cited:
- WO-A1-95/18922
- WO-A1-95/18922
- JP-A- H0 925 898
- JP-A- H08 159 097
- JP-A- H08 159 097
- JP-A- H08 232 605
- JP-A- 2005 536 687
- JP-A- 2011 085 095
- JP-A- 2012 513 561
- JP-A- 2013 040 587
- US-A- 4 871 294
- US-A- 5 474 417
- US-A1- 2006 153 673
- US-A1- 2009 041 576

## Description

### TECHNICAL FIELD

The present invention relates to an axial flow device which is used as a fan or an axial flow compressor and on which casing treatment has been performed and to a jet engine.

### BACKGROUND ART

The axial flow device is generally known as a device that is used as the fan or the axial flow compressor and constitutes part of a turbine engine such as the jet engine. The axial flow device includes at least one stage of a compressor that has a rotor blade row including a plurality of rotor blades and rotating centering on a central axis, and a stator vane row provided in the rear of the rotor blade row and including a plurality of stator vanes. The fan is provided at the forefront of the engine and sucks the outside air. The axial flow compressor is installed between the fan and a combustion chamber, compresses gas that has been taken in from the fan while decelerating it and thereafter supplies it into the combustion chamber.

In a case where the fan and the axial flow compressor are of a multistage system that the rotor blade row and the stator vane row are alternately arrayed, a speed, a pressure and a temperature of the gas change every time it passes through each stage. On the other hand, in a steady operation, each rotor blade row rotates with a predetermined number of rotations. Accordingly, in a relation between a flow rate and a pressure ratio of the gas, a range (a so-called operating range) that all stages work efficiently is narrow. In a case where operating states of the fan and the axial flow compressor have deviated from this operating range, a surge (a stall) is prone to occur.

It is conceived to expand a margin (in the following, a surge margin) from a design point to a stall point in order to prevent this stall from occurring. Patent Literatures 1 to 4 propose, as a technology of promoting expansion of this surge margin, so-called casing treatment that forms a groove or a flow path in an inner surface of a casing that houses the rotor blade row and the stator vane row.

Further, a cast casing treatment for compressor blades is known from Patent Literature 5, wherein each segment of a segmented annular shroud comprises first, second and third arcuate members and a plurality of vane walls integral with the first second and third members, and each arcuate member has a radially inner surface, and the third arcuate member is in spaced relation to the first and second members, and each vane wall spans between the radially inner surface of the third arcuate member and the radially inner surfaces of the first and second members.

Moreover, a housing for axial flow fans is known from Patent Literature 6, wherein the housing is a cylindrical housing for an axial-flow fan, formed with an annular recess to provide an alternative path for air flow in the reverse direction when it occurs near the outer diameter of the fan blading. The recess contains vanes whose curvature about the housing axes changes progressively from the inlet end of the recess to the outlet end and which at least at the inlet end have a curvature about an axis generally parallel to the housing axis, so that air which is travelling generally circumferentially as it enters the recess is initially deflected towards a radially-outward direction by encounter with the vanes. The recess may also contain a ring-shaped fairing which physically separates the recess inlet from its outlet and which may serve to diminish turbulence in the air travelling through the recess.

Additionally, a fan and a casing of a compressor are known from Patent Literature 7, wherein in the case that a moving blade is rotationally moved and relative flow near the moving blade shows supersonic speed, air between the adjacent moving blades is compressed due to generation of shock wave and reduction of flow velocity. Air is compressed also by the rotation of the moving blades . A part of high pressure flow in a boundary layer behind the shock wave is supplied to an inner surface of a casing at a front position of the shock wave. At a position near the leading end of the moving blade where the peripheral speed shows a maximum value, a part of air flow passing a circulation passage is added to its back surface.

Further, an axial-flow fan is known from Patent Literature 8 and a turbomachine exerting dynamic influence on the flow is known from Patent Literature 9.

### CITATION LIST

### PATENT LITERATURE

Patent Literature 1: JP 2009-236069 A
Patent Literature 2: US 7 811 049 A
Patent Literature 3: US 5 607 284 A
Patent Literature 4: US 8 066 471 A
Patent Literature 5: US 5 474 417 A
Patent Literature 6: WO 95/18922 A1
Patent Literature 7: JP H08 159097 A
Patent Literature 8: US 4 871 294 A
Patent Literature 9: US 2006/153673 A1

### SUMMARY OF INVENTION

### TECHNICAL PROBLEM

As indicated in Patent Literatures 1 to 4, it is possible to expand the surge margin by performing the casing treatment on the inner surface of the casing. Expansion of the surge margin is always demanded with development of the turbine engine. On the other hand, as described also in Patent Literature 1, although conventional casing treatment expands the surge margin, there was a problem that it reduces efficiency inversely.

The present invention has been made in view of such circumstances. That is, the present invention aims to provide an axial flow device on which the casing treatment that suppresses a reduction in efficiency and can improve the stall margin has been performed, and a jet engine.

### SOLUTION TO PROBLEM

According to a first aspect of the present invention, there is provided an axial flow device that is used as a fan or an axial flow compressor, comprising: at least one stage of a compressor including a rotor blade row and a stator vane row; a tubular casing housing the compressor; and an operating range expansion unit having a suction port that opens in an inner surface of the casing, a blow-out port that opens anterior to the rotor blade row in the inner surface of the casing, and a hollow section that is formed inside the casing and communicates the suction port with the blow-out port, wherein a flow path in the blow-out port is inclined reversely to a rotation direction of the rotor blade row relative to the radially inward side, wherein the suction port opens into a region in the inner surface of the casing, the region facing and corresponding to a locus of a tip of a rotor blade of the rotor blade row in a radial direction when the rotor blade row rotates, the suction port is formed into a groove shape that annularly extends in a circumferential direction in the same sectional shape, the hollow section is a belt-shaped space that extends in the circumferential direction in a same sectional shape, and a plurality of fins that is installed at intervals in a circumferential direction in the blow-out port and constitutes the flow path of the blow-out port.

According to this configuration, a height of the hollow section in a radial direction may be larger than a width of the suction port in an axial direction.

The flow path of the blow-out port may run from the hollow section toward the rotor blade row with an inclination relative to the radial direction in a section including a central axis of the tubular casing.

The compressor may be provided in a plurality of stages and the operating range expansion unit may be provided for the rotor blade row in at least one stage of the compressor in the plurality of stages of the compressors.

In addition, a second aspect of the present invention is a jet engine that includes the axial flow device relating to the first aspect.

### ADVANTAGEOUS EFFECTS OF INVENTION

According to the present invention, there can be provided the axial flow device on which the casing treatment that suppresses the reduction in efficiency and can improve the stall margin has been performed.

### BRIEF DESCRIPTION OF DRAWINGS

[Fig. 1] Fig. 1 is a configuration diagram of a turbofan engine in which a fan and an axial flow compressor of the present embodiment are mounted.
[Fig. 2] Fig. 2 (a) and Fig. 2 (b) are diagrams for explaining an operating range expansion unit relating to the present embodiment, in which Fig. 2(b) is a sectional diagram along a IIB-IIB line in Fig. 2(a).
[Fig. 3] Fig. 3 is a diagram for explaining a modified example of the operating range expansion unit relating to the present embodiment.
[Fig. 4] Fig. 4 is a graph showing a relation between a flow rate (a corrected flow rate) and a total pressure ratio by a CFD (Computational Fluid Dynamics) analysis.
[Fig. 5] Fig. 5 is a graph showing a relation between the flow rate (the corrected flow rate) and the total pressure ratio and a relation between the flow rate (the corrected flow rate) and efficiency by the CFD analysis.

### DESCRIPTION OF EMBODIMENTS

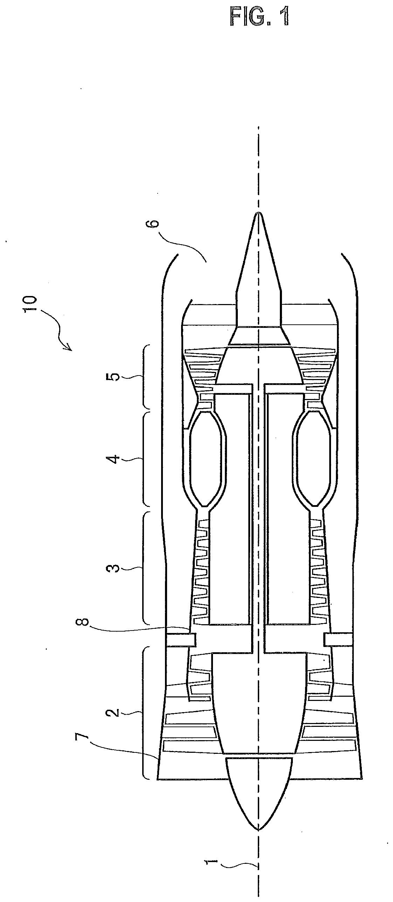

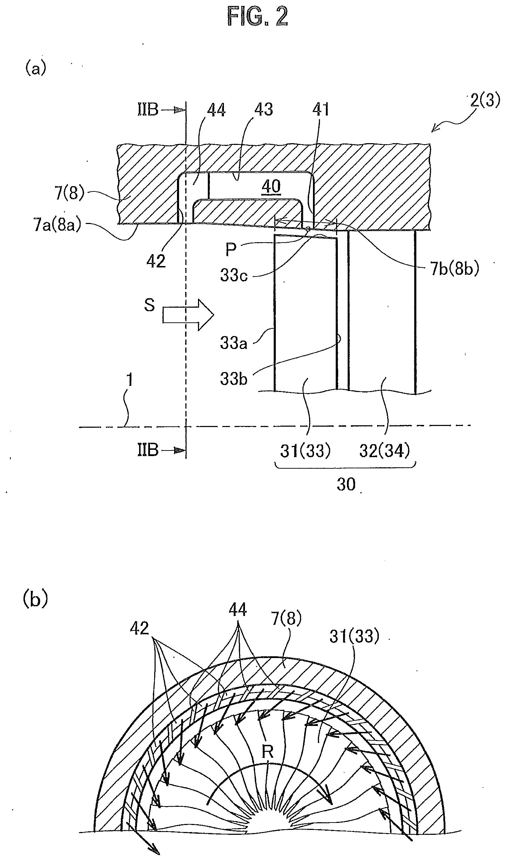

In the following, an axial flow device relating to an embodiment of the present invention will be described on the basis of the appended drawings. Incidentally, in the respective drawings, the same numerals are assigned to common parts and duplicated description is omitted. In the respective drawings, the left side (the left) is defined as the front side (the front) or the upstream side of a main stream S (see Fig. 2(a)) and the right side (the right) is defined as the rear side (the rear) or the downstream side of the main stream S. In addition, in Fig. 1, an axis 1 is shown as a central axis and an extending direction thereof is referred to as an axial direction. Further, a circumferential direction and a radial direction are defined with the axis 1 being set as a reference.

The axial flow device of the present embodiment is used as a fan and an axial flow compressor and constitutes part of a turbofan engine that is one of gas turbine engines. However, the engine that includes the axial flow device of the present embodiment is not limited to the turbofan engine and is also applicable to jet engines such as a turbojet engine, a turboprop engine, a turboshaft engine, and a turbo-ram jet engine. In addition, also application of the gas turbine engine is not limited to use for air crafts. It is also applicable to, for example, gas turbine engines for ships and for power generation. In the following, the axial flow compressor will be simply referred to as a compressor and the turbofan engine will be simply referred to as an engine for the convenience of description.

Fig. 1 is a configuration diagram of an engine (the turbofan engine, the jet engine) 10 in which a fan 2 and an axial flow compressor 3 of the present embodiment are mounted. As shown in this drawing, the engine 10 includes the fan 2, the compressor 3, a combustion chamber 4, and a turbine 5. These are arrayed on the axis 1 directing from the upstream side toward the downstream side of the main stream. The engine 10 further includes a casing (an external casing, a fan case) 7 and a casing (an internal casing, a core cowl) 8 that is housed in the casing 7 and is located coaxially with the casing 7. Both of the casing 7 and the casing 8 are formed into tubular shapes that extend along the axis 1. The casing 7 houses the fan 2 on inner front of the casing 7. The casing 8 is installed in the rear of the fan 2 in the casing 7 and houses the compressor 3, the combustion chamber 4 and the turbine 5. The basic operation of each unit is the same as that of the conventional one. That is, the fan 2 rotates with the axis 1 being set as the central axis, sucks gas on the front and discharges it to the rear. The compressor 3 compresses gas that has flown into the casing 8 in the gas (a working fluid, air in the present embodiment) that the fan 2 has sucked while decelerating it and supplies it to the combustion chamber 4. The combustion chamber 4 burns a mixed gas of the compressed gas with a fuel. The turbine 5 converts pressure energy of the burned gas that expands into rotational energy, drives the fan 2 and the compressor 3 and discharges the burned gas through an exhaust duct 6. Incidentally, the compressor 3 of a multiaxial system in which the compressor has been divided into a plurality of compressors in accordance with a pressure of the gas to be compressed may be adopted. The same applies to the turbine 5. In addition, the casing 8 is configured by coupling together a plurality of tubular members that houses respective units such as the compressors 3.

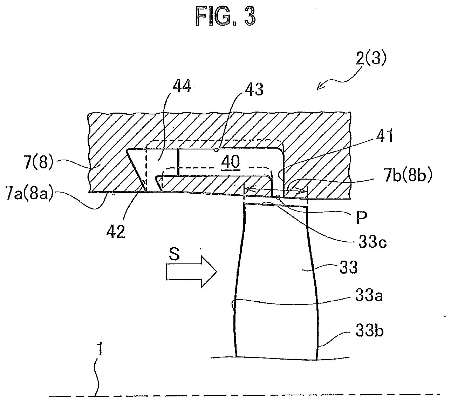

The fan 2 and the compressor 3 of the present embodiment will be described. Configurations of the fan 2 and the compressor 3 will be shown by use of Fig. 2 and Fig. 3 for the convenience of description. Incidentally, sizes, shapes and so forth of the rotor blade, the stator vane and the work region expansion unit (described later) of the fan 2 and the compressor 3 are not limited to those in these drawings and can be appropriately changed as long as the advantageous effect of the present invention can be obtained. However, the scope of the present invention is solely defined by the appended claims. As shown in Fig. 2, the fan 2 and the compressor 3 each include at least one stage of a compressor 30 which includes a rotor blade row (blade row) 31 that rotates centering on the axis 1 and a stator vane row (vane row) 32 that is installed in the rear of the rotor blade row 31 along the axis 1. The rotor blade row 31 includes a plurality of rotor blades (blades) 33 that is radially installed centering on the axis 1 (see Fig. 2(b)). The rotor blade 33 of the rotor blade row 31 has a leading edge 33a that is located on the upstream side of the main stream S, and a trailing edge 33b that is located on the downstream side of the main stream S (see Fig. 2(a)). In addition, a tip 33c of the rotor blade 33 is slightly separated from an inner surface 7a (8a) of the casing 7 (8). All of the rotor blades 33 have the same sectional shape and are curved so as to project in the same direction in the circumferential direction. Incidentally, also stator vanes 34 of the stator vane row 32 have the same shape. That is, also the stator vane row 32 includes a plurality of the stator vanes (vanes) 34 that is installed radially centering on the axis 1. The stator vane 34 is fixed to, for example, the inner surface 7a (8a) of the casing 7 (8). Incidentally, the number of stages of the compressors 30 is appropriately set in accordance with the specification of the engine 10.

Fig. 2(a) and Fig. 2(b) show an operating range expansion unit 40 as casing treatment relating to the present embodiment. Fig. 2(b) is a sectional diagram along the IIB-IIB line in Fig. 2(a). As shown in Fig. 2(a), the axial flow device that serves as the fan 2 or the compressor 3 includes the operating range expansion unit 40. That is, the operating range expansion unit 40 is formed in at least one of the casing 7 and the casing 8, sucks part of the gas that has flown into the rotor blade row 31 through a suction port 41 and blows it out through a blow-out port 42 on the front side of the rotor blade row 31. In a case where the axial flow device of the present embodiment has a plurality of stages of the compressors 30, the operating range expansion unit 40 is provided for the rotor blade row 31 in at least one stage of the compressor 30 in the plurality of stages of the compressors 30. For example, the operating range expansion unit 40 may be provided only for the rotor blade row 31 in the first stage of the compressor 30 and may be provided for the respective rotor blade rows 31 of other stages in the compressors 30.

The operating range expansion unit 40 has the suction port 41 and the blow-out port 42 that open in the inner surface 7a (8a) of the casing 7 (8), and a hollow section 43 that communicates the suction port 41 with the blow-out port 42. The suction port 41 opens into a region 7b (8b) corresponding to the rotor blade row 31 in the inner surface 7a (8a) of the casing 7 (8) and sucks part of the gas that has flown into the rotor blade row 31. In addition, the suction port 41 is provided posterior to a later described crossing position P. The region 7b (8b) is a belt-shaped part that has a width ranging from the leading edge 33a to the trailing edge 33b of the rotor blade 33 in an axial direction and extends in the circumferential direction on the inner surface 7a (8a) of the casing 7 (8). In other words, the region 7b (8b) is the part that corresponds to (faces) the locus of the tip 33c of the rotor blade 33 that rotates on the inner surface 7a (8a) of the casing 7 (8).

In the following, an example in which the operating range expansion unit 40 is formed in the casing 7 will be described. Since the configuration of the operating range expansion unit 40 is the same also in a case where it is formed in the casing 8, detailed description thereof is omitted unless otherwise noted in particular.

The suction port 41 is formed into a groove shape that extends in the circumferential direction in the same sectional shape. A depth direction of the suction port 41 is parallel with the radial direction. The suction port 41 functions as a so-called diffusor that decelerates the gas that has flown in from the casing 7 and compresses it. A width of the suction port 41 in the axial direction is constant at any place in the radial direction. Note that a height of the hollow section 43 in the radial direction is larger than the width of the suction port 41 in a section including the axis 1. Accordingly, from the viewpoint of reducing a pressure loss, the width of the suction port 41 may be gradually widened as it goes outward in the radial direction.

The blow-out port 42 opens anterior to the rotor blade row 31 in the inner surface 7a of the casing 7 and blows out the gas that has been sucked in through the suction port 41. The blow-out port 42 is formed as a groove that extends in the circumferential direction in the same sectional shape and a later described fin 44 is further provided within it. The blow-out port 42 extends in the radial direction in the section including the axis 1. In addition, a width of the blow-out port 42 in the axial direction is constant at any place in the radial direction. Incidentally, this width is smaller than the height of the hollow section 43. Accordingly, the blow-out port 42 reduces the pressure of the gas and accelerates the gas concerned when blowing it out.

As shown in Fig. 2 (a) and Fig. 2(b), a plurality of the fins 44 that has been installed at intervals in the circumferential direction is provided in the blow-out port 42. Each fin 44 is formed into a plate shape that extends in the axial direction and constitutes at least a flow path of the blow-out port 42. In addition and outside the scope of the present invention, as shown in these drawings, it may project to the hollow section 43 and further may extend to the rear in the hollow section 43. Each fin 44 is inclined in the same direction as a rotation direction R of the rotor blade row 31 relative to the radially outward side and defines a flowing direction of the gas that is blown out through the blow-out port 42. In other words, the flow path (a depth direction of the blow-out port 42) in the blow-out port 42 is inclined reversely to the rotation direction R relative to the radially inward side so as to generate the gas that swirls reversely to the rotation direction R of the rotor blade row 31.

The hollow section 43 is formed inside the casing 7 and communicates the suction port 41 with the blow-out port 42. The hollow section is a belt-shaped space that extends in the axial direction and extends in the circumferential direction in the same sectional shape. As described above, the height of the hollow section 43 in the radial direction is larger than the width of the suction port 41. Accordingly, the gas that has flown into it through the suction port 41 is decelerated and compressed and moves in the hollow section 43 toward the blow-out port 42. The height of the hollow section 43 in the radial direction is constant at any place in the axial direction.

An operation and advantageous effects of the operating range expansion unit 40 owing to the above-mentioned configuration will be described. The pressure is increased toward the downstream side in the rotor blade row 31. A pressure difference is generated between the suction port 41 and the blow-out port 42 in response to this pressure increase. As a result, part of the gas in the rotor blade row 31 is sucked into the suction port 41 and blows out through the blow-out port 42. In other words, the operating range expansion unit 40 makes part of the gas that has flown into the rotor blade row 31 circulate between the rotor blade row 31 and the front side thereof. The gas that has blown out through the blow-out port 42 compensates for the flow rate of the gas that flows into the rotor blade row 31. Accordingly, at a flow rate that a surge occurs in a general compressor in which the operating range expansion unit 40 is not provided, occurrence of the surge concerned can be prevented. That is, it becomes possible to move a stall point of the fan 2 or the compressor 3 closer to the low flow rate side. That is, a stall margin is improved.

In addition the pressure difference across the rotor blade row 31 is proportional to a workload that the rotor blade row 31 has done on the gas. This workload is proportional to a product of a difference between circumferential-direction components of respective relative velocities of the gas (the main stream) that flows into the rotor blade row 31 and the gas (the main stream) that is discharged from the rotor blade row 31, and a rotating speed of the rotor blade row 31. In the present embodiment, the flow path in the blow-out port 42 is inclined reversely to the rotation direction R of the rotor blade row 31 relative to the radially inward side. Accordingly, the gas is blown out through the blow-out port 42 such that it swirls reversely to the rotation direction R. The difference in the above-mentioned relative velocity becomes large by blowing-out of the gas that generates this reverse swirling flow and, as a result, the workload is increased. However, since an incidence angle that is a difference between an inflow angle of a flow into the rotor blade row 31 and a blade inlet angle of the rotor blade 33 becomes large in comparison with a case where the operating range expansion unit 40 is not provided, separation on the back side of the rotor blade 33 is increased. Accordingly, it is possible to avoid the surge concerned and increase the surge margin by sucking out a separation region on the back side of the aforementioned rotor blade by the suction port 41.

Incidentally, in a case where the rotor blade row 31 rotates at a high speed, part of the main stream S reaches an acoustic velocity between the rotor blades 33 and, as a result, a shock wave is generated. This shock wave arrives at the inner surface 7a (the region 7b) of the casing 7 (the inner surface 8a (the region 8b) of the casing 8). When the rotor blade row 31 rotates at a design point, this arrival point is located at a crossing position P shown in Fig. 2(a). In addition, since when the flow rate is reduced, this arrival point moves forward from the crossing position P and the pressure in the suction port 41 is increased, the pressure difference between the suction port 41 and the blow-out port 42 is increased and the flow rate that it is sucked in through the suction port 41 is increased. Accordingly, in a case where the suction port 41 is provided posterior to the crossing position P, it becomes possible to increase an inflow amount thereof into the suction port 41 and a blow-out amount thereof through the blow-out port 42 when the flow rate is reduced. On the other hand, since, at the design point, the pressure difference between the suction port 41 and the blow-out port 42 is small and the inflow amount thereof into the suction port 41 and the blow-out amount thereof through the blow-out port 42 are little, it does not worsen the efficiency.

In addition, as shown in Fig. 3, the flow path in the blow-out port 42 may be inclined relative to the radial direction such that it runs from the front side of the hollow section 43 toward the rotor blade row 31 in the section including the axis 1. However, the length of the flow path in the blow-out port 42 is not changed. In this case, the same advantageous effect as that in a case where the flow path in the blow-out port 42 extends in the radial direction in the section including the axis 1 can be obtained and it becomes possible to make the position of the hollow section 43 closer to the axis 1. Accordingly, for example, reductions in thickness and weight of the casing 7 (8) become possible.

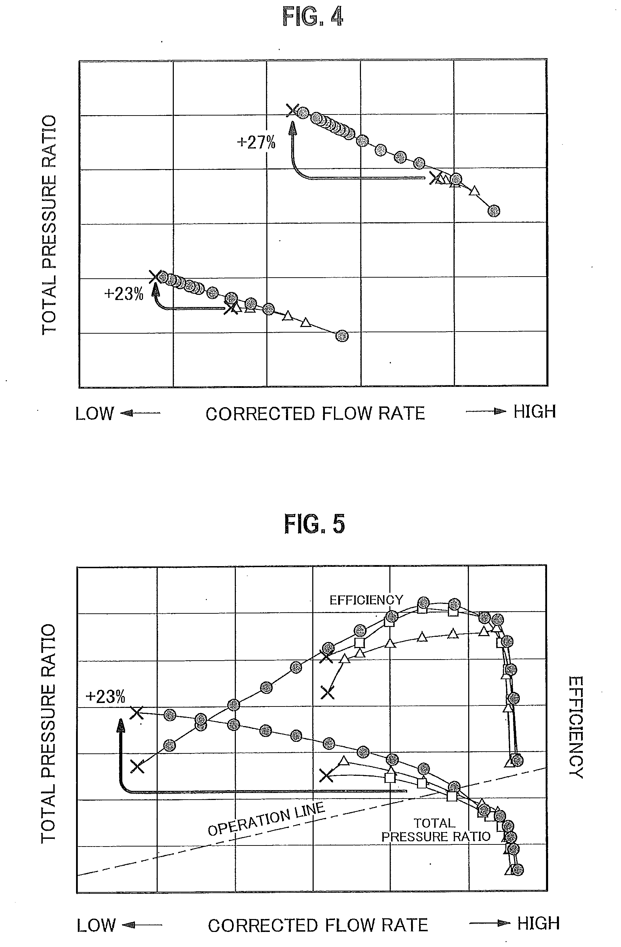

Fig. 4 is a graph showing a relation between a flow rate (a corrected flow rate) and a total pressure ratio by a CFD analysis. A circle (o) shows a result of analysis of the compressor relating to the present embodiment, and a triangle (Δ) shows a result of analysis of a compressor as a comparative example. In the compressor of the comparative example, the operating range expansion unit in the compressor relating to the present embodiment is omitted. In addition, x in the drawing is a stall point. As shown in this drawing, in the compressor relating to the present embodiment, improvement of the stall margin of 23% on the low flow rate side and 27% on the high flow rate side is observed.

Fig. 5 is a graph showing a relation between the flow rate (the corrected flow rate) and the total pressure ratio and a relation between the flow rate (the corrected flow rate) and efficiency by the CFD analysis. The circle (o) shows a result of analysis of the compressor relating to the present embodiment, and the triangle (Δ) shows a result of analysis of a compressor as a comparative example 1. In the compressor of the comparative example 1, the operating range expansion unit in the compressor relating to the present embodiment is omitted. Further, a square (□) shows a result of analysis of a compressor as a comparative example 2. In the compressor of the comparative example 2, the flow path in the blow-out port in the operating range expansion unit of the present embodiment is inclined so as to generate the gas which swirls in the same direction as the rotation direction of the rotor blade row. As shown in Fig. 5, the stall margin of the compressor of the present embodiment is drastically improved relative to those of the comparative example 1 and the comparative example 2. It is improved relative to the comparative example 1 also in terms of the efficiency and this is equal to the efficiency of the comparative example 2. That is, the efficiency is not lowered even when the casing treatment is performed.

As mentioned above, according to the present invention, there is provided the fan or the axial flow compressor on which the casing treatment that suppresses a reduction in efficiency and can improve the stall margin has been performed.

## Claims

1. An axial flow device that is used as a fan (2) or an axial flow compressor (3), comprising:
at least one stage of a compressor (30) including a rotor blade row (31) and a stator vane row (32);
a tubular casing (7) housing the compressor (30); and
an operating range expansion unit (40) having a suction port (41) that opens in an inner surface (7a) of the casing (7), a blow-out port (42) that opens anterior to the rotor blade row (31) in the inner surface (7a) of the casing (7), and a hollow section (43) that is formed inside the casing (7) and communicates the suction port (41) with the blow-out port (42), wherein
a flow path in the blow-out port (42) is inclined reversely to a rotation direction of the rotor blade row (31) relative to the radially inward side,
the suction port (41) is formed into a groove shape that annularly extends in a circumferential direction in the same sectional shape,
the hollow section (43) is a belt-shaped space that extends in the circumferential direction in a same sectional shape, and
a plurality of fins (44) is installed at intervals in a circumferential direction in the blow-out port (42) and constitutes the flow path of the blow-out port (42), and **characterized in that**
the suction port (41) opens into a region (7b) in the inner surface (7a) of the casing (7), the region facing and corresponding to a locus of a tip of a rotor blade of the rotor blade row (31) in a radial direction when the rotor blade row rotates.

2. The axial flow device according to claim 1, wherein
a height of the hollow section (43) in the radial direction is larger than a width of the suction port (41) in an axial direction.

3. The axial flow device according to claim 1 or 2, wherein
the flow path of the blow-out port (42) runs from a front side of the hollow section (43) toward the rotor blade row (31) with an inclination relative to the radial direction in a section including a central axis of the tubular casing (7).

4. The axial flow device according to any one of claims 1 to 3, wherein
the compressor (30) is provided in a plurality of stages and the operating range expansion unit (40) is provided for the rotor blade row (31) in the at least one stage of the compressor (30) in the plurality of stages of the compressors (30).

5. A jet engine (10), comprising an axial flow device according to any one of claims 1 to 4.

## Patentansprüche

1. Axialströmungsvorrichtung, die als ein Gebläse (2) oder Axialströmungsverdichter (3) verwendet wird, umfassend:
mindestens eine Stufe eines Verdichters (30), der eine Rotorschaufelreihe (31) und eine Statorschaufelreihe (32) umfasst;
ein rohrförmiges Gehäuse (7), in dem der Verdichter (30) aufgenommen ist; und
eine Betriebsbereichserweiterungseinheit (40), die eine Ansaugöffnung (41), die sich in eine Innenfläche (7a) des Gehäuses (7) öffnet, eine Ausblasöffnung (42), die sich anterior zu der Rotorschaufelreihe (31) in die Innenfläche (7a) des Gehäuses (7) öffnet, und ein Hohlprofil (43) aufweist, das innerhalb des Gehäuses (7) gebildet ist und die Ansaugöffnung (41) mit der Ausblasöffnung (42) verbindet, wobei
ein Strömungsweg in der Ausblasöffnung (42) relativ zu der radial nach innen gerichteten Seite in eine Drehrichtung der Rotorschaufelreihe (31) in umgekehrter Richtung geneigt ist,
die Ansaugöffnung (41) in eine Nutform gebildet ist, die sich in einer Umfangsrichtung in der gleichen Querschnittsform ringförmig erstreckt,
das Hohlprofil (43) ein gürtelförmiger Raum ist, der sich in der Umfangsrichtung in einer gleichen Querschnittsform erstreckt, und
mehrere Rippen (44) in Abständen in einer Umfangsrichtung in der Ausblasöffnung (42) angebracht sind und den Strömungsweg der Ausblasöffnung (42) bilden, und **dadurch gekennzeichnet, dass**
sich die Ansaugöffnung (41) in einen Bereich (7b) in der Innenfläche (7a) des Gehäuses (7) öffnet, wobei der Bereich einem Ort einer Spitze einer Rotorschaufel der Rotorschaufelreihe (31) in einer radialen Richtung zugewandt ist und diesem entspricht, wenn sich die Rotorschaufelreihe dreht.

2. Axialströmungsvorrichtung nach Anspruch 1, wobei
eine Höhe des Hohlprofils (43) in der radialen Richtung größer ist als eine Breite der Ansaugöffnung (41) in einer axialen Richtung.

3. Axialströmungsvorrichtung nach Anspruch 1 oder 2, wobei
der Strömungsweg der Ausblasöffnung (42) von einer Vorderseite des Hohlprofils (43) in Richtung der Rotorschaufelreihe (31) mit einer Neigung relativ zu der radialen Richtung in einem Abschnitt verläuft, der eine Mittelachse des rohrförmigen Gehäuses (7) umfasst.

4. Axialströmungsvorrichtung nach einem der Ansprüche 1 bis 3, wobei
der Verdichter (30) in mehreren Stufen vorgesehen ist und die Betriebsbereichserweiterungseinheit (40) für die Rotorschaufelreihe (31) in der mindestens einen Stufe des Verdichters (30) in den mehreren Stufen der Verdichter (30) vorgesehen ist.

5. Triebwerk (10), das eine Axialströmungsvorrichtung nach einem der Ansprüche 1 bis 4 umfasst.

## Revendications

1. Dispositif à écoulement axial qui est utilisé en tant que ventilateur (2) ou compresseur à écoulement axial (3) comprenant :
au moins un étage d'un compresseur (30) comprenant une rangée de pales de rotor (31) et une rangée d'aubes de stator (32) ;
un carter tubulaire (7) logeant le compresseur (30) ; et
une unité d'expansion de plage de fonctionnement (40) ayant un orifice d'aspiration (41) qui s'ouvre dans une surface interne (7a) du carter (7), un orifice de soufflage (42) qui s'ouvre avant la rangée de pales de rotor (31) dans la surface interne (7a) du carter (7), et une section creuse (43) qui est formée à l'intérieur du carter (7) et fait communiquer l'orifice d'aspiration (41) avec l'orifice de soufflage (42), dans lequel :
une trajectoire d'écoulement dans l'orifice de soufflage (42) est inclinée de manière réversible par rapport à une direction de rotation de la rangée de pales de rotor (31) par rapport au côté radialement interne,
l'orifice d'aspiration (41) est formé dans une forme de rainure qui s'étend annulairement dans une direction circonférentielle dans la même forme transversale,
la section creuse (43) est un espace en forme de ceinture qui s'étend dans la direction circonférentielle dans une même forme transversale, et
une pluralité d'ailettes (44) est installée à intervalles dans une direction circonférentielle dans l'orifice de soufflage (42) et constitue la trajectoire d'écoulement de l'orifice de soufflage (42), et **caractérisé en ce que** :
l'orifice d'aspiration (41) s'ouvre dans une région (7b) dans la surface interne (7a) du carter (7), la région faisant face et correspondant à un lieu d'une pointe d'une pale de rotor de la rangée de pales de rotor (31) dans une direction radiale lorsque la rangée de pales de rotor tourne.

2. Dispositif à écoulement axial selon la revendication 1, dans lequel :
une hauteur de la section creuse (43) dans la direction radiale est supérieure à une largeur de l'orifice d'aspiration (41) dans une direction axiale.

3. Dispositif à écoulement axial selon la revendication 1 ou 2, dans lequel :
la trajectoire d'écoulement de la partie de soufflage (42) s'étend à partir d'un côté avant de la section creuse (43) vers une rangée de pales de rotor (31) avec une inclinaison par rapport à la direction radiale dans une section comprenant un axe central du carter tubulaire (7).

4. Dispositif à écoulement axial selon l'une quelconque des revendications 1 à 3, dans lequel :
le compresseur (30) est prévu dans une pluralité d'étages et l'unité d'expansion de plage de fonctionnement (40) est prévue pour la rangée de pales de rotor (31) dans le au moins un étage du compresseur (30) dans la pluralité d'étages des compresseurs (30).

5. Moteur à réaction (10) comprenant un dispositif à écoulement axial selon l'une quelconque des revendications 1 à 4.
